(19) Europäisches Patentamt

European Patent Office

Office européen des brevets

(11) Veröffentlichungsnummer: **0 234 037 B1**

# EUROPÄISCHE PATENTSCHRIFT

(45) Veröffentlichungstag der Patentschrift: **25.03.92**

(51) Int. Cl.5: **H04M 1/02**

(21) Anmeldenummer: **86117534.7**

(22) Anmeldetag: **17.12.86**

(54) **Fernsprechapparat.**

(30) Priorität: **25.01.86 DE 3602271**
**08.03.86 DE 3607727**

(43) Veröffentlichungstag der Anmeldung:
**02.09.87 Patentblatt 87/36**

(45) Bekanntmachung des Hinweises auf die
Patenterteilung:
**25.03.92 Patentblatt 92/13**

(84) Benannte Vertragsstaaten:
**AT BE CH FR GB IT LI LU NL SE**

(56) Entgegenhaltungen:
**DE-A- 2 355 666**
**DE-C- 3 210 111**
**US-A- 4 533 791**

**TELEFONBAU UND NORMALZEIT NACHRICH-
TEN, Heft 87, 1985, Seiten 21-26, Frankfurt am
Main, DE; W.-D. HAASS et al.: "TK 80 - eine
neue Generation von Endgeräten"**

**TELEFONBAU UND NORMALZEIT NACHRICH-
TEN, Nr. 89, Mai 1986, Seiten 19-27, Frankfurt
am Main, DE; W.-D. HAASS et al.: "Neue
ISDN-Endgeräte"**

(73) Patentinhaber: **TELENORMA GMBH**

**Mainzer Landstrasse 128-146**
**W-6000 Frankfurt/Main(DE)**

(72) Erfinder: **Richter, Ludwig, Ing.**
**Heinrich-v.-Stephanstrasse 34**
**W-6056 Heusenstamm(DE)**
Erfinder: **Niederhöfer, Karl-Heinz, Dipl.-Ing.**
**Dalbergstrasse 4**
**W-6230 Frankfurt(DE)**
Erfinder: **Krämer, Dieter,Dipl.-Ing.**
**Im Hain 5**
**W-6270 Idstein(DE)**
Erfinder: **Sussner, Gerhard**
**Waldstrasse 45**
**W-6462 Meerholz(DE)**
Erfinder: **Girscher, Wolfgang, Dipl.-Ing.**
**Woogstrasse 27**
**W-6000 Frankfurt 50(DE)**
Erfinder: **Münch, Volker, Entw.-Ing.**
**Stegerwaldstrasse 53**
**W-6000 Frankfurt 80(DE)**
Erfinder: **Vial, Heinrich, Entw.-Ing.**
**Königsteiner Strasse 1**
**W-6236 Eschhorn(DE)**
Erfinder: **Mayer, Helmut R., Dipl.-Designer**
**Höhenweg 22**
**W-6350 Bad Nauheim(DE)**

EP 0 234 037 B1

Erfinder: **Von Reyer, Hayo**
**Höhenweg 22**
**W-6350 Bad Nauheim(DE)**

## Beschreibung

Die Erfindung betrifft einen Fernsprechapparat mit einer Wähl- und evtl. einer Bedientastatur, einer darüber angebrachten Anzeigevorrichtung, evtl. einer Lauthör- und/oder Freisprecheinrichtung mit einer Einstellvorrichtung für die Lautstärke und einem Handapparat, welcher in, an der Oberseite seitlich neben der bzw. den Tastaturen und der Anzeigevorrichtung parallel zur Längsachse angebrachten Ablagemulden einlegbar ist, wobei das Gehäuse des Fernsprechapparates durch eine Oberseite, je eine Seitenfläche, eine Rückwand und eine Unterseite gebildet wird.

Bei derartigen, bekannten Fernsprechapparaten verläuft die die Wähl- und Bedientastatur tragende Oberseite nur schwach geneigt (1o°) zur Auflagefläche des Fernsprechapparates, so daß die Anzeigevorrichtung zur besseren Ablesbarkeit in einem steileren Winkel angebracht werden muß (DE-OS 34 06 881). So lange die Tasten selbst beschriftet sind, leidet die Lesbarkeit der Beschriftung durch die schwache Neigung der Oberseite des Fernsprechapparates nicht, Schwierigkeiten bei der Ablesbarkeit treten dann auf, wenn zwischen den Tasten oder neben den Tasten Beschriftungsstreifen angebracht sind. Die geringe Neigung der Oberfläche zusammen mit der in der Regel niedrigen Höhe des Fernsprechapparategehäuses hat zwar den Vorteil, daß der Fernsprechapparat mit einer Hand leicht angehoben werden kann, wobei gleichzeitig mit der Hand der Handapparat auf die Oberseite gedrückt wird.

Es ist auch bereits aus der DE-PS 32 10 111 ein Fernsprechapparat zur Verwendung als Tisch- oder Wandapparat bekannt, bei welchem die die Tastaturen tragende Oberseite stärker dem Benutzer zugeneigt ist. In diesem Fall ist, wie bereits erwähnt, eine bessere Ablesbarkeit der Tastenbeschriftung und der Anzeigevorrichtung vorhanden, nachteilig ist jedoch bei derartigen Fernsprechapparat, daß dieser nicht mehr mit einer Hand angehoben werden kann.

Die Aufgabe der Erfindung besteht nun darin, einen Fernsprechapparat anzugeben, bei welchem einerseits eine gute Ablesbarkeit der Tastenbeschriftung und der Anzeigevorrichtung gegeben ist und andererseits dieser auch leicht mit einer Hand anhebbar ist.

Diese Aufgabe wird dadurch gelöst, daß der Fernsprechapparat pultförmig ausgebildet ist, wobei die Oberseite in einem Winkel von größer 20° und kleiner 45° zur Auflagefläche des Fernsprechapparates geneigt ist, daß die Rückwand zur Oberseite im Winkel von 80° bis 100° angeordnet ist und daß die Unterseite parallel zur Oberseite und zur Rückwand verläuft.

Der Fernsprechapparat hat somit eine Gehäuseform mit einem "L"-förmigen Querschnitt, wobei dieser auf den beiden Schenkelenden auf der Auflagefläche aufliegt. Der Abstand zwischen der Unterseite des Apparategehäuses und der Oberseite des Handapparates kann dabei derart gewählt werden, daß dieser leicht mit der Hand zu umfassen ist, wodurch sich der Fernsprechapparat mit einer Hand leicht anheben läßt. Durch die stärkere Neigung der Oberseite gegen den Benutzer wird eine gute Ablesbarkeit der Tastenbeschriftung und der Anzeigevorrichtung erreicht.

Eine Weiterbildung der Erfindung besteht darin, daß der Raum zwischen der Oberseite und der Unterseite die elektrischen und elektronischen Bauteile der Grundausstattung des Fernsprechapparates aufnimmt, während in den Raum zwischen der Rückwand und der Unterseite Zusatzeinrichtungen durch entsprechende Öffnungen in der Rückwand einsetzbar sind.

Durch die besondere Ausbildung des Fernsprechapparategehäuses kann auf eine Griffmulde zum Anheben des Fernsprechapparates in der Rückwand verzichtet werden, so daß dieser Raum für Zusatzeinrichtungen frei bleibt, wodurch sich der Fernsprechapparat verschiedenen Anwendungszwecken leicht anpassen läßt.

Eine Weiterbildung der Erfindung besteht darin, daß an dem zur Oberseite parallel liegenden Teil der Unterseite eine bis zum parallel zur Rückwand liegenden Teil der Unterseite reichende Wanne angebracht ist, welche schmaler ist als die Breite des Fernsprechapparates. Bei entsprechender Breite des Fernsprechapparates kann eine genügend große Wanne an der Unterseite angebracht werden, welche zur Aufnahme weiterer Einrichtungen beispielsweise einer zusätzlichen Leiterplatte dient.

Eine Weiterbildung der Erfindung besteht auch darin, daß die Wanne seitlich mit Kabeleinführungen versehen ist.

Auf diese Weise ist ein seitliches Herausführen der Kabel (Anschlußschnüre, Handapparate-Anschlußschnur, usw.) unter der Unterseite des Fernsprechapparates möglich.

Eine Weiterbildung der Erfindung besteht auch darin, daß die Wähl- und evtl. die Bedientastatur zusammen mit der Anzeigevorrichtung an einem mit der Oberseite bündig abschließenden Schlitten angebracht ist, welcher von einer ersten in eine zweite Lage verschiebbar ist, und daß in der zweiten Lage eine weitere darunterliegende Tastatur, beispielsweise eine alpha-numerische Eingabetastatur, Zielwahltastatur usw. oder eine Anzeigevorrichtung freigegeben ist.

Auf diese Weise läßt sich die Tastatur vergrößern, ohne daß eine entsprechende Vergrößerung der Oberseite notwendig ist.

Eine Weiterbildung der Erfindung besteht auch darin, daß der obere Teil der Rückwand einen Teil des Schlittens bildet. Durch eine derartige Ausbildung des Schlittens ist es möglich, an demselben einen Ausweisleser und/oder auch einen Drucker anzuordnen. Weitere Vorteile ergeben sich aus den Unteransprüchen.

Die Erfindung wird anhand eines Ausführungsbeispiels näher erläutert, welches in der Zeichnung dargestellt ist.

Es zeigt:

Fig. 1 eine perspektivische Ansicht des Fernsprechapparates von vorn,

Fig. 2 einen Schnitt durch das erste Drittel des Fernsprechapparategehäuses,

Fig. 3 einen Schnitt durch das zweite Drittel des Fernsprechapparategehäuses,

Fig. 4 einen Schnitt durch das Gehäuse in der Höhe der Handapparateauflage,

Fig. 5 einen Schnitt durch das Fernsprechapparategehäuse mit dem Schlitten in der zweiten Lage und

Fig. 6 eine perspektivische Ansicht des Fernsprechapparates von hinten.

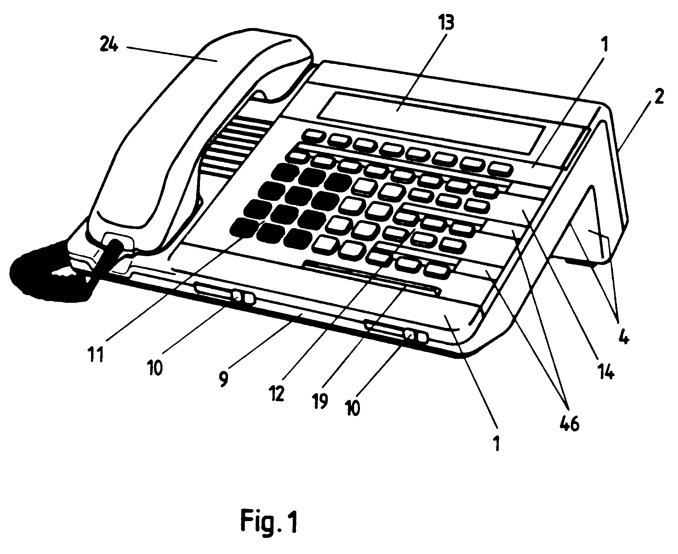

Der pultförmige Fernsprechapparat weist eine Oberseite 1 auf, welche in einem Winkel von größer als 20° jedoch kleiner als 45° zur Auflagefläche geneigt ist (Fig. 1). Die Rückwand 2 steht zur Oberseite 1 in einem Winkel von 80° bis 100°. Die Unterseite 4 verläuft parallel zur Oberseite 1 bzw. zur Rückwand 2, wodurch sich ein "L"-Querschnitt des Apparategehäuses ergibt. Ein Teil der Oberseite 1 und zwar der die Wähltastatur 11, die Bedientastatur 12 die Anzeigevorrichtung 13 tragende Teil ist als Schlitten 14 ausgebildet, welcher nach hinten in der Längsrichtung verschiebbar ist. Das Verschieben erfolgt über die Griffleiste 19. An der Vorderfläche 9 sind die Betätigungsmittel 10 zur Einstellung der Lautstärke der Lauthöreinrichtung, zur Einstellung der Lautstärke des Ruforgangs, zur Einstellung der Helligkeit der Anzeigevorrichtung 13 usw. angeordnet. Der Handapparat 24 ruht in entsprechenden Ablagemulden auf der linken Seite des Gehäuses.

Unter dem Handapparategriff kann hinter entsprechenden Öffnungen der elektroakustische Wandler für das Ruforgan bzw. die Lauthör- bzw. Freisprecheinrichtung angebracht sein. Die Oberseite 1 weist Bezeichnungsstreifen 46 auf, welche in schwalbenschwanzförmigen Schlitzen seitlich herausziehbar angebracht sind.

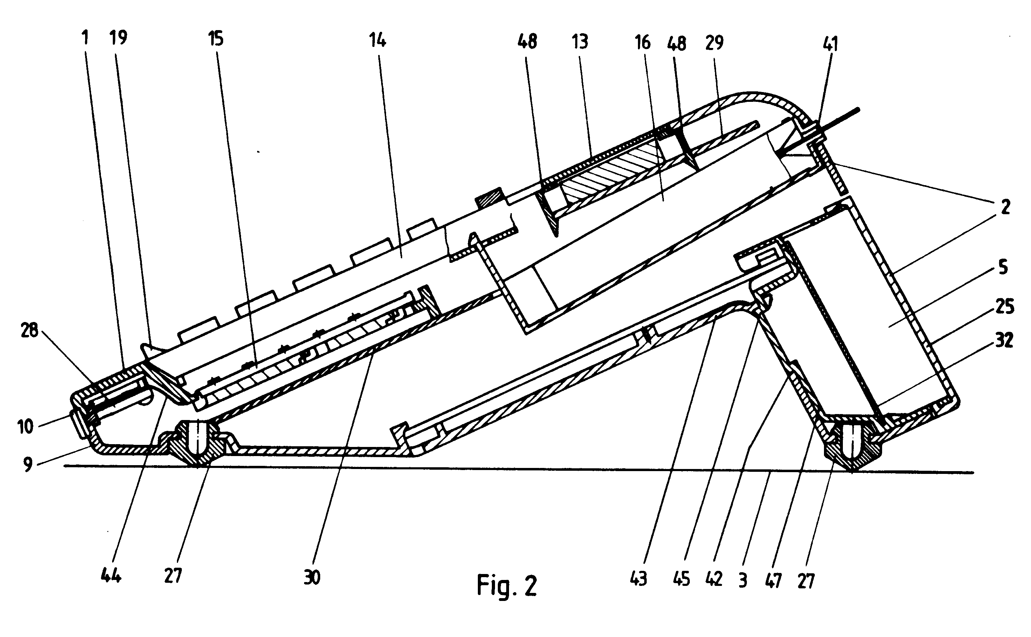

In Fig. 2 wird ein Längsschnitt durch das Gehäuse in dessen rechten Drittel gezeigt. Das Gehäuse ruht mit den Gummifüßen 27 auf der Auflagefläche 3. Die Rückwand 2 weist Öffnungen 5 auf, welche mit Deckeln 25 verschließbar sind. In die Öffnungen 5 sind Leiterplatten 32 tragende Modulgehäuse 47 einsetzbar, welche Zusatzeinrichtungen tragen. Diese Modulgehäuse 47 weisen jeweils einen Vorsprung 45 auf, welcher in eine entsprechende Öffnung 42 der parallel zur Rückwand 2 liegenden Unterseite 4 passen. Weiterhin weisen die Modulgehäuse 47 jeweils eine Öffnung auf, in welche die an der zur Oberseite 1 liegenden Unterseite 4 angebrachte federnde Rastnase 43 einrastet. Durch Druck auf die parallel zur Oberseite 1 liegende Unterseite 4 im Bereich der federnden Rastnase 43 läßt sich das Modul 47 wieder heraus lösen.

Ein Teil der Oberseite 1 ist mit dem Teil der Rückwand 2 oberhalb der Deckel 25 als Schlitten 14 ausgebildet, welcher mit Hilfe der Griffleiste 19 gemäß der dargestellten Ansicht nach rechts parallel zur Oberseite 1 verschiebbar ist. Der Schlitten 14 enthält eine Tastatur, eine Anzeigevorrichtung 13 mit der dazugehörigen Leiterplatte 29 und einen Ausweisleser 16, in welchen durch die Öffnung 41 in der Rückwand 2 der Ausweis einschiebbar ist. Dieser Teil der Rückwand ist Bestandteil des Schlittens 14. An der Vorderfläche 9 sind Betätigungsmittel 10 angebracht, mit welchem im Innern des Gehäuses angebrachte Potentiometer 28 verstellbar sind. Diese Potentiometer können beispielsweise als Schiebepotentiometer ausgebildet sein. Ist die Tastatur 15 als Folientastatur ausgebildet, so kann deren Folien 44 entsprechend verlängert sein und an der Verlängerung ein Teil des Potentiometers selbst angebracht sein, wie dies in der Patentanmeldung P ....... beschrieben ist.

Die die Anzeigevorrichtung 13 tragende Leiterplatte 29 wird durch im Innern des Gehäuses unterhalb der Oberseite 1 angebrachte Rastnasen 48 gehalten.

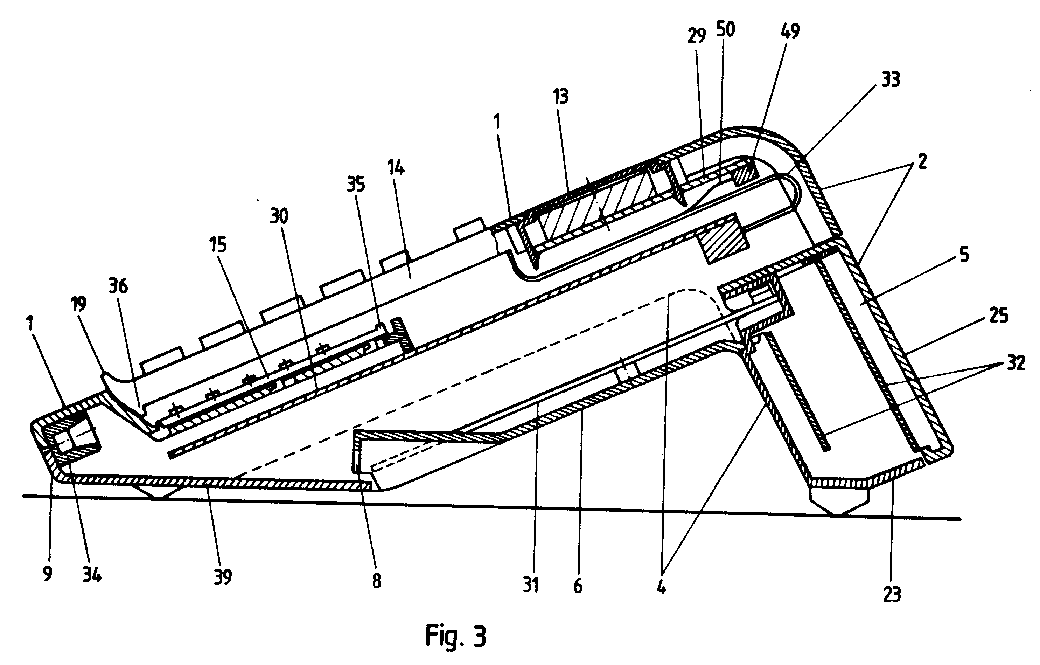

In Fig. 3 wird ein Längsschnitt durch das mittlere Drittel des Apparategehäuses gezeigt. An der parallel zur Oberseite 1 liegenden Unterseite 4 die mit einer gestrichelten Linie angedeutet ist, ist eine Wanne 6 angeordnet, welche sich bis zu der parallel zur Rückwand 2 liegenden Unterseite 4 erstreckt. Diese Wanne ist schmaler als die Breite des Fernsprechapparates. Die Wanne dient u.a. zur Aufnahme einer weiteren Leiterplatte 31. Die parallel zur Oberseite 1 liegende Unterseite 4 und die Wanne 6 sind in Richtung zur Vorderfläche 9 abgeknickt und zwar derart, daß der Bereich 39 parallel zur Auflagefläche 3 läuft. Die Wanne 6 weist Kabeleinführungen 8 auf, welche in Längsrichtung parallel zur Auflagefläche 3 laufen. Die Kabel können in Längsrichtung parallel zur Auflagefläche 3 mit Hilfe von in der Nähe der Auflage 23 in dem Raum zwischen der Rückwand 2 und der Unterseite 4 angebrachten, nicht gezeigten Kabelhalterungen nach hinten weggeführt werden. Die parallel zur Rückwand 2 verlaufende Vorderfläche 9 ist mit entsprechenden Schalleintrittsöffnungen versehen, hinter welchen ein Mikrofon 34 für die Freisprecheinrichtung angebracht ist.

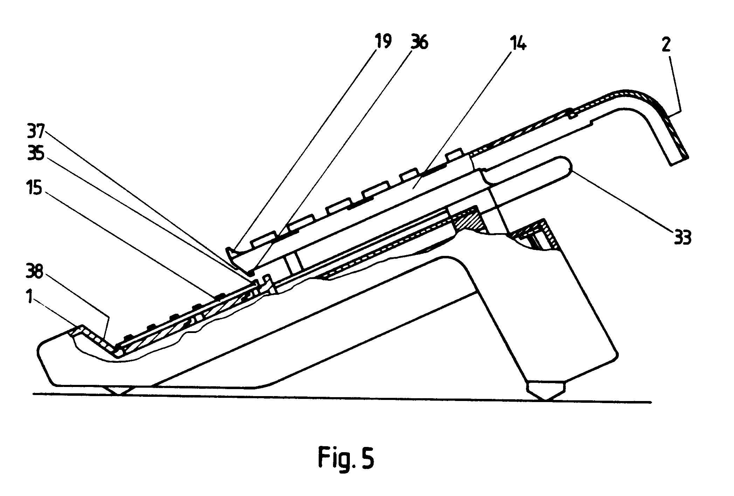

Der Schlitten 14 weist an seiner Unterseite in der Nähe der Griffleiste 19 eine Querleiste 36 auf, welche in der durch einen nicht gezeigten Anschlag definierten zweiten Lage des Schlittens direkt mit der an der darunterliegenden Tastatur 15 angebrachten Querleiste 35 fluchtet (siehe Fig. 5). Zur elektrischen Verbindung zwischen dem Schlitten 15 und dem feststehenden Teil des Gehäuses bzw. der Leiterplatte 34 dient ein flexibles Flachkabel oder eine entsprechend ausgebildete flexible Leiterplatte 33 mit den entsprechenden Leiterbahnen. Ist die Tastatur des Schlittens als Folientastatur ausgebildet, so kann die Folie derselben entsprechend verlängert werden, so daß diese selbst die Leiterplatte 33 bildet. Außerdem kann die Folie der Folientastatur durch eine entsprechende Ausbildung d.h. durch die Anschlußfolie 50 zum elektrischen Anschluß der Anzeigevorrichtung 13 herangezogen werden indem diese mit dem Anschlußteil 49 der Leiterplatte 29 verbunden wird. In die Räume 5, welche im unbenutzten Zustand durch Deckel 25 in der Rückwand 2 verschließbar sind, können, wie bereits gesagt Module zur Aufnahme von Zusatzeinrichtungen eingesetzt werden, welche auch mehrere Leiterplatten 32 enthalten können.

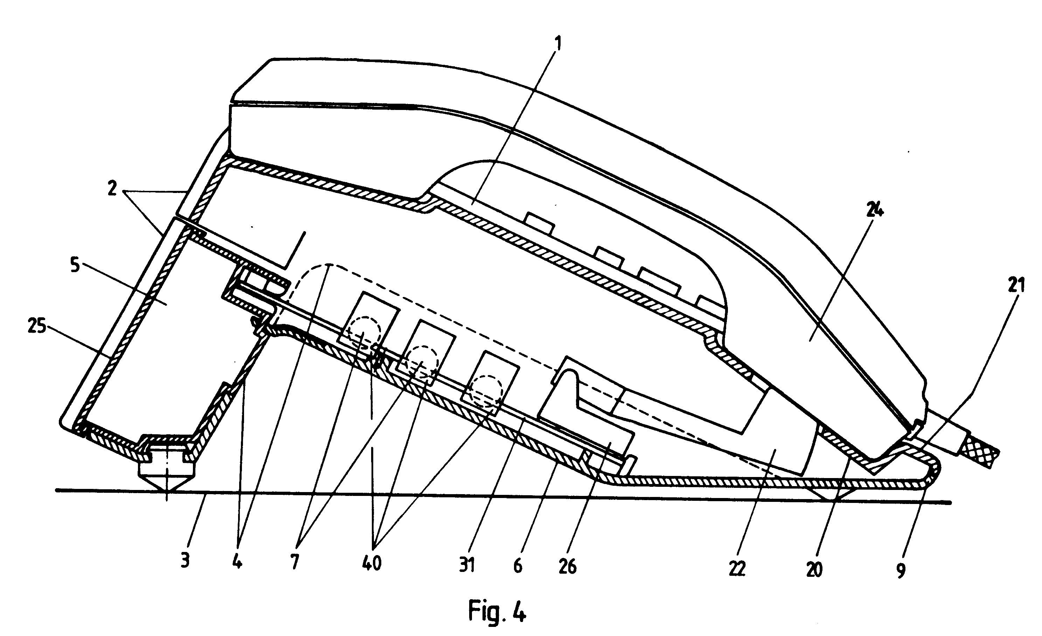

In Fig. 4 wird ein Längsschnitt in Höhe der Handapparateauflage gezeigt. Der Handapparat 24 liegt in zwei Ablagemulden auf der Oberseite 1 auf, wobei die Ablagemulde 20 durch einen Wulst 21 von der Vorderfläche 9 getrennt ist. Durch die Ablagemulde 20 ragt die Nase 22 des Betätigungshebels für den Kabelumschaltkontakt 26 hervor. Auf der in der Wanne 6 angebrachten Leiterplatte 31 sind Anschlußelemente 40 befestigt, an welchen die durch die gestrichelten Linien angedeuteten, seitlich an der Wanne 6 angebrachten Öffnungen 7 hindurchgeführte Kabel angeschlossen werden. Diese Kabel dienen zum Anschluß der Teilnehmeranschlußleitung, zum Anschluß von Zusatzeinrichtungen außerhalb des Fernsprechapparates und zum Anschluß der Anschlußschnur des Handapparates 24.

In Fig. 5 wird der Schlitten 14 in seiner zweiten Lage in einer Seitenansicht mit teilweisem Schnitt gezeigt. Die Vorderkante 37 des Schlittens 14 unterhalb der Griffleiste 19 ist der Schräge 38 angepaßt, welche zwischen der Oberseite 1 und der Tastatur 15 vorhanden ist. Die beiden Querleisten 35 und 36 liegen in dieser Lage des Schlittens 14 übereinander.

Der Schlitten 14 kann sowohl in der Ruhelage als auch in der zweiten, die Tastatur 15 freigebenden Lage einen Kontakt betätigen, welcher zur Umschaltung von Funktionen der Tastatur des Schlittens 14 bzw. der Anzeigevorrichtung des Schlittens dienen kann. Die Tastatur 15 kann als alpha-numerische Eingabetastatur oder auch als Zielwahltastatur ausgebildet sein. Weiterhin kann anstelle der Tastatur 15 auch eine weitere Anzeigevorrichtung eingesetzt werden. Diese kann als Besetztlampenfeld oder auch als erweiterte Anzeigevorrichtung der Anzeigevorrichtung des Schlittens 14 dienen, wobei die Umschaltung über den bereits erwähnten Kontakt erfolgt.

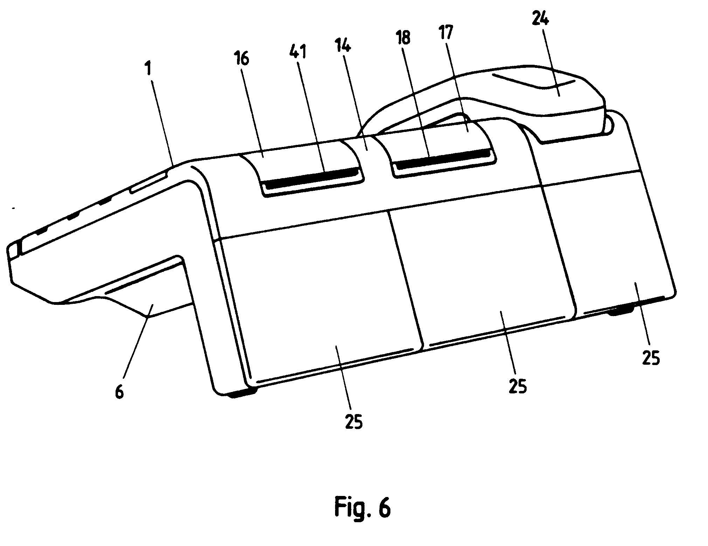

In dem Schlitten 14 ( Fig. 6) können ein Ausweisleser 16 oder ein Drucker 17 angeordnet werden, wobei der Ausgabeschlitz 18 des Druckers bzw. der Schlitz 41 für den Kartenleser in den Rückwand und zwar parallel zur Oberseite 1 angeordnet sind. Der nicht bewegliche Teil der Rückwand weist eine oder mehrere nicht gezeigte Öffnungen 5 auf, welche durch Deckel 25 verschließbar sind. In diese Öffnungen, sind wie bereits erwähnt Zusatzeinrichtungen wie beispielsweise Anrufbeantworter, Modems, besondere Schnittstellen in Form von Modulen einsetzbar, wobei das Modul im eingesetzten Zustand ebenso wie ein Deckel 25 die Rückwand abschließt. Bei der in Fig. 6 gezeigten Darstellung wird auch deutlich, daß die Breite der Wanne 6 geringer ist als die Breite des Fersnprechapparates.

Da in dem Raum zweischen der Unterseite 4 und der Oberseite 1 diejenigen elektrischen und elektronischen Bauteile der Grundausstattung des Fernsprechapparates untergebracht sind und in den Raum zwischen der Rückwand 2 und der Unterseite 4 Zusatzeinrichtungen in Form von Modulen einsetzbar sind, kann ein derartiger Fernsprechapparat einer Vielzahl von Einsatzzwecken angepaßt werden. So läßt sich der Fernsprechapparat gemäß der Erfindung als Multifunktionsterminal, Komfortfernsprechapparat, Vermittlungsapparat, usw. einsetzen. Dabei können der durch den Schlitten 14 freigegebenen Tastatur 15 bzw. der Anzeigevorrichtung solche Funktionen zugewiesen werden, welche nicht häufig benötigt werden, so daß der in seinen beiden Lagen einrastende Schlitten 14 für die größere Zeit der Benutzung des Fernsprechapparates in seiner Ruhelage verbleiben kann.

**Patentansprüche**

1.    Fernsprechapparat mit einer Wähl- und evtl. einer Bedientastatur, einer darüber angebrachten Anzeigevorrichtung, evtl. einer Lauthör- und/oder Freisprecheinrichtung mit einer Einstellvorrichtung für die Lautstärke und einem Handapparat, welcher in, an der Oberseite seitlich neben der bzw. den Tastaturen und der Anzeigevorrichtung parallel zur Längsachse angebrachten Ablagemulden einlegbar ist, wobei das Gehäuse des Fernsprechapparates durch eine Oberseite, je eine Seitenfläche, eine Rückwand und eine Unterseite gebildet wird, dadurch gekennzeichnet,

daß der Fernsprechapparat pultförmig ausgebildet ist, wobei die Oberseite (1) in einem Winkel von größer 20° und kleiner 45° zur Auflagefläche (3) des Fernsprechapparates geneigt ist, daß die Rückwand (2) zur Oberseite (1) im Winkel 80° bis 100° angeordnet ist,

daß die Unterseite (4) parallel zur Oberseite (1) und zur Rückwand (2) verläuft, daß der Abstand zwischen der Oberseite (1) und der Unterseite (4) bzw. zwischen Rückwand (2) und Unterseite (4) gleich oder annähernd gleich ist so daß die Gehäuseform einem auf den beiden Schenkelenden ruhenden "L" entspricht, daß der Raum zwischen der Oberseite (1) und der Unterseite (4) die elektrischen und elektronsichen Bauteile der Grundausstattung des Fernsprechapaprates aufnimmt und daß in dem Raum zwischen der Oberseite (1) und der Unterseite (4) eine oder mehrere Leiterplatten (30,31) parallel oder annähernd parallel zur Oberseite (1) angebracht sind.

2. Fernsprechapparat nach Anspruch 1,
dadurch gekennzeichnet,
daß in den Raum zwischen der Rückwand (2) und der Unterseite (4) Zusatzeinrichtungen durch entsprechende Öffnungen (5) in die Rückwand (2) einsetzbar sind.

3. Fernsprechapparat nach einem der Ansprüche 1 oder 2,
dadurch gekennzeichnet,
daß an dem zur Oberseite (1) parallel liegenden Teil der Unterseite (4) eine bis zum parallel zur Rückwand (2) liegenden Teil der Unterseite (4) reichende Wanne (6) angebracht ist, welche schmaler ist als die Breite des Fernsprechapparates und daß die Wanne (6) eine weitere Leiterplatte (31) enthält.

4. Fernsprechapparat nach Anspruch 3,
dadurch gekennzeichnet,
daß die Wanne (6) seitlich mit Kabeleinführungen (7) versehen ist.

5. Fernsprechapparat nach einem der Ansprüche 1 bis 3,
dadurch gekennzeichnet,
daß der parallel zur Oberseite (1) liegende Teil der Unterseite (4) und/oder die Wanne (6) im Bereich (39) der Auflage derart abgeknickt ist, daß diese parallel zur Auflagefläche (3) verläuft.

6. Fernsprechapparat nach einem der vorangegangenen Ansprüche,
dadurch gekennzeichnet,
daß die Vorderfläche (9), d.h. die Fläche zwischen der Oberseite (1) und der Unterseite (4) parallel zur Rückwand (2) verläuft und daß in der Vorderfläche (9) die Betätigungsmittel (10) für die Einstellvorrichtung für die Lautstärke und evtl. weitere Einstellvorrichtungen angebracht sind.

7. Fernsprechapparat nach einem der Ansprüche 1 bis 6,
dadurch gekennzeichnet,
daß die Wähl- (11) und evtl. die Bedientastatur (12) zusammen mit der Anzeigevorrichtung (13) an einem mit der Oberseite (1) bündig abschließenden Schlitten (14) angebracht ist, welcher von einer ersten in eine zweite Lage verschiebbar ist und daß in der zweiten Lage eine weitere, darunter liegende Tastatur (15), beispielsweise eine alpha-numerische Eingabetastatur, (Zielwahltastatur, usw.)oder eine Anzeigevorrichtung freigegeben ist, daß der obere Teil der Rückwand (2) einen Teil des Schlittens (14) bildet, daß in dem Schlitten (14) ein Ausweisleser (16) angeordnet ist, dessen Schlitz (41) zur Einführung des Ausweises sich im oberen Teil der Rückwand (2) parallel zur Oberseite (1) befindet und daß in dem Schlitten (14) ein Drucker (17) angeordnet ist, dessen Ausgabeschlitz (18) sich im oberen Teil der Rückwand (2) parallel zur Oberseite (1) befindet.

8. Fernsprechapparat nach Anspruch 6,
dadurch gekennzeichnet,
daß hinter der Vorderfläche (9) im Bereich einer entsprechenden Öffnung das Mikrofon (34) der Freisprecheinrichtung angebracht ist.

9. Fernsprechapparat nach Anspruch 2,
dadurch gekennzeichnet,
daß die Zusatzeinrichtungen modulartig in geschlossenen Gehäusen (47) untergebracht sind, welche im eingesetzten Zustand mit der Rückwand (2) abschließen, daß die Modulgehäuse (47) auf der der Rückwand bzw. dem Deckel (25) abgewandten Seite jeweils einen Vorsprung (45) aufweisen, welcher in eine entsprechende Öffnung (42) der parallel zur Rückwand (2) liegenden Unterseite (4) paßt und daß die parallel zur Oberseite (1) liegende Unterseite (4) eine federnde Rastnase (43) aufweist, welche in das eingesetzte Modulgehäuse (47) einrastet.

10. Fernsprechapparat nach einem der vorhergehenden Ansprüche,
dadurch gekennzeichnet,
daß dieser als Wandapparat mit der Rückwand (2) nach unten an einer Wand befestigt benutzbar ist.

**Claims**

1. Telephone apparatus with a dialling and possibly an operating keyboard, an indicating device disposed thereabove, possibly a loudspeaking and/or free-speaking equipment with a setting device for the loudness strength, and a handset which is layable into deposit troughs disposed at the upper side laterally close to the keyboard or keyboards and the indicating device and parallel to the longitudinal axis, wherein the housing of the telephone apparatus is formed by an upper side, a respective side surface, a back wall and a lower side, characterised thereby that the telephone apparatus is constructed desk-shaped, wherein the upper side (1) is inclined relative to the support surface (3) of the telephone apparatus in an angle of greater 20° and smaller 45°, that the back wall (2) is arranged relative to the upper side (1) in the angle 80 to 100°, that the lower side (4) extends parallel to the upper side (1) and to the back wall (2), that the spacing between the upper side (1) and the lower side (4) or between back wall (2) and lower side (4) is the same or approximately the same, so that the housing form corresponds to an "L" resting on the two limb ends, that the space between the upper side (1) and the lower side (4) accommodates the electrical and electronic components of the basic layout of the telephone apparatus and that one or several circuit boards (30, 31) are disposed in the space between the upper side (1) and the lower side (4) and parallel or approximately parallel to the upper side (1).

2. Telephone apparatus according to claim 1, characterised thereby that additional devices are insertable into the space between the back wall (2) and the lower side (4) through corresponding openings (5) in the back wall (2).

3. Telephone apparatus according to one of claims 1 or 2, characterised thereby that disposed at that part of the lower side (4) lying parallel to the upper side (1) is a pan (6), which reaches to that part of the lower side (4) lying parallel to the back wall (2) and which is narrower than the width of the telephone apparatus, and that the pan (6) contains a further circuit board (31).

4. Telephone apparatus according to claim 3, characterised thereby that the pan (6) is laterally provided with cable feeds (7).

5. Telephone apparatus according to one of claims 1 to 3, characterised thereby that that part of the lower side (4) lying parallel to the upper side (1) and/or the pan (6) is bent over in the region (39) of the support in such a manner that this extends parallel to the support surface (3).

6. Telephone apparatus according to one of the aforesaid claims, characterised thereby that the front surface (9), i.e. the surface between the upper side (1) and the lower side (4), extends parallel to the back wall (2) and that the actuating means (10) for the setting device for the loudness strength and possibly further setting devices are disposed in the front surface (9).

7. Telephone apparatus according to one of claims 1 to 6, characterised thereby that the dialling keyboard (11), and possibly the operating keyboard (12), is disposed together with the indicating device (13) at a slide (14) which closes off flush with the upper side (1) and which is displaceable from a first into a second position, and that in the second position a further keyboard (15), for example an alpha-numeric input keyboard (destination dialling keyboard, etc) or an indicating device, which is disposed under the slide, is freed, that the upper part of the back wall (2) forms a part of the slide (14), that arranged in the slide (14) is a pass reader (16), the slot (41) - for the introduction of the pass - of which is disposed in the upper part of the back wall (2) and parallel to the upper side (1) and that arranged in the slide (14) is a printer (17), the output slot (18) of which is disposed in the upper part of the back wall (2) and parallel to the upper side (1).

8. Telephone apparatus according to claim 6, characterised thereby that the microphone (34) of the free-speaking equipment is disposed behind the front surface (9) and in the region of a corresponding opening.

9. Telephone apparatus according to claim 2, characterised thereby that the additional devices are accommodated module-like in closed housings (47), which in the inserted state close off with the back wall (2), that the modular housings (47) each have, on the side remote from the back wall or the cover (25), a respective projection (45) which fits into a corresponding opening (42) of the lower side (4) lying parallel to the back wall (2) and that the lower side (4) lying parallel to the upper side (1) has a resilient detent nose (43) which detents into the inserted modular housing (47).

10. Telephone apparatus according to one of the aforesaid claims, characterised thereby that this is usable as wall apparatus with the back wall (2) downwardly fastened to a wall.

**Revendications**

1. Poste téléphonique comprenant un clavier de numérotation et, éventuellement, un clavier de commande, un afficheur placé au-dessus de lui ou au-dessus d'eux, éventuellement un dispositif d'écoute amplifiée et/ou un dispositif "mains libres" avec un organe de réglage pour le volume sonore et un combiné pouvant être posé dans des creux formant un logement parallèle à l'axe longitudinal, latéralement à côté du ou des claviers et de l'afficheur, le boîtier du poste téléphonique étant formé par un côté supérieur, une face latérale de chaque côté, une paroi arrière et un côté inférieur, caractérisé en ce qu'il est conformé à la façon d'un pupitre, avec un côté supérieur (1) dont l'angle d'inclinaison par rapport à la surface de support (3) du poste téléphonique est supérieur à 20° et inférieur à 45°, que la paroi arrière (2) est orientée sous un angle de 80° à 100° par rapport au côté supérieur (1), que le côté inférieur (4) s'étend en partie parallèlement au côté supérieur (1) et en partie parallèlement à la paroi arrière (2), que la distance entre le côté supérieur (1) et le côté inférieur (4) est égale ou approximativement égale à la distance entre la paroi arrière (2) et le côté inférieur (4), de sorte que la forme du boîtier correspond à un "L" reposant sur les deux extrémités des branches, que l'espace entre le côté supérieur (1) et le côté inférieur (4) reçoit les composants électriques et électroniques de l'équipement de base du poste téléphonique et qu'une ou plusieurs plaquettes de circuits imprimés (30, 31) sont disposées parallèlement ou à peu près parallèlement au côté supérieur (1) dans l'espace entre le côté supérieur (1) et le côté inférieur (4).

2. Poste téléphonique selon la revendication 1, caractérisé en ce que des dispositifs supplémentaires peuvent être insérés à travers des ouvertures (5) correspondantes de la paroi arrière (2) dans l'espace entre la paroi arrière (2) et le côté inférieur (4).

3. Poste téléphonique selon la revendication 1 ou 2, caractérisé en ce qu'une cuvette (6) est disposée sur la partie du côté inférieur (4) parallèle au côté supérieur (1), cuvette qui s'étend jusqu'à la partie du côté inférieur (4) parallèle à la paroi arrière (2) et dont la largeur est inférieure à celle du poste téléphonique, et que la cuvette (6) contient une plaquette de circuits imprimés (31) supplémentaire.

4. Poste téléphonique selon la revendication 3, caractérisé en ce que la cuvette (6) est pourvue latéralement d'entrées de câbles (7).

5. Poste téléphonique selon une des revendications 1 à 3, caractérisé en ce que la partie du côté inférieur (4) parallèle au côté supérieur (1) et/ou la cuvette (6) est infléchie dans la région (39) de l'appui, de manière à s'étendre parallèlement à la surface de support (3).

6. Poste téléphonique selon une des revendications précédentes, caractérisé en ce que la face avant (9), c'est-à-dire la face située entre le côté supérieur (1) et le côté inférieur (4), est parallèle à la paroi arrière (2) et que les moyens de commande (10) pour le dispositif de réglage du volume sonore, de même que d'autres dispositifs de réglage éventuels, sont placés dans la face avant (9).

7. Poste téléphonique selon une des revendications 1 à 6, caractérisé en ce que le clavier de numérotation (11) et, éventuellement, le clavier de commande (12) est ou sont disposé(s), ensemble avec l'afficheur (13), sur un coulisseau (14) qui affleure le côté supérieur (1) et peut être amené par coulissement d'une première à une seconde position, que ce coulisseau dégage, à sa seconde position, un clavier (15) supplémentaire situé sous lui, par exemple un clavier d'introduction alphanumérique (tel qu'un clavier de présélection, et ainsi de suite) ou un dispositif d'affichage, que la partie supérieure de la paroi arrière (2) fait partie du coulisseau (14), qu'un lecteur (16) de cartes d'identification (cartes à mémoire utilisables dans les téléphones publics) est logé dans le coulisseau (14), avec la fente (41) pour l'insertion de la carte parallèlement au côté supérieur (1) dans la partie supérieure de la paroi arrière (2), et qu'une imprimante (17) est logée en plus dans le coulisseau (14), avec sa fente de sortie (18) parallèlement au côté supérieur (1) dans la partie supérieure de la paroi arrière (2).

8. Poste téléphonique selon la revendication 6, caractérisé en ce que le microphone (34) du dispositif "mains libres" est placé derrière la face avant (9) dans la région d'une ouverture adéquate.

9. Poste téléphonique selon la revendication 2, caractérisé en ce que les dispositifs supplémentaires sont logés à la façon de modules dans des boîtiers (47) fermés qui sont alignés avec la paroi arrière (2) à l'état inséré, que les boîtiers (47) des modules présentent chacun, sur le côté éloigné de la paroi arrière ou du couvercle (25), une saillie (45) qui s'ajuste dans une ouverture (42) correspondante de la partie du côté inférieur (4) parallèle à la paroi arrière (2), et que cette partie parallèle au côté supérieur (1) du côté inférieur (4) présente un nez d'arrêt élastique (43) qui vient s'encliqueter dans le boîtier inséré (47) du module.

10. Poste téléphonique selon une des revendications précédentes, caractérisé en ce qu'il est utilisable en tant que poste mural dans une position fixée à un mur avec la paroi arrière (2) en bas.

**Fig. 1**

Fig. 2

11

EP 0 234 037 B1

Fig. 3

12

Fig. 4

Fig. 5

**Fig. 6**